# EUROPEAN PATENT SPECIFICATION

(11) **EP 2 184 184 B1**
(45) Date of publication and mention of the grant of the patent: **13.07.2011**
(21) Application number: 09174972.1
(22) Date of filing: 04.11.2009
(51) Int. Cl.: B60C 1/00, B60C 9/00, B60C 15/00, C08K 7/02, C08L 7/00, C08L 9/00

(54) **Tire with component containing polyketone short fiber and epoxidized polyisoprene**
reifen mit komponenten mit polyketonkurzfaser und epoxidiertem polyisopren
pneu avec composant contenant une fibre courte de polykétone et polyisoprène d'époxyde

(30) Priority: 07.11.2008 US 266572
(43) Date of publication of application: 12.05.2010
(73) Proprietor: The Goodyear Tire & Rubber Company, Akron, OH 44316-0001 (US)
(72) Inventor: Mruk, Ralf, 7740, Colmar-Berg (LU); Schmitz, Frank, 7782, Bissen (LU); Imhoff, Serge Julien Auguste, 9184, Schrondweiler (LU); Lechtenboehmer, Annette, 9048, Ettelbruck (LU); Tahon, Julia Martine Francoise Claudine, 7213, Bereldange (LU)
(74) Representative: Kutsch, Bernd

(56) References cited:
- EP-A1- 1 260 385
- EP-A1- 1 609 623
- EP-A1- 1 839 907
- EP-A1- 1 867 495
- JP-A- 7 082 420
- JP-A- 11 060 819
- JP-A- 2007 269 876

## Description

### Background of the Invention

Rubber components for use in pneumatic tires are sometimes reinforced with short textile fibers. In general, the presence of short fibers in a cured rubber compound results in an increase in initial or low strain (low elongation) modulus (stiffness). Concomitantly, the presence of short fibers in the rubber often times results in reduced fatigue endurance and in higher hysteretic heat build-up under periodic stresses.

Improvement in the performance of tires containing short fibers can be obtained by treating the surface of the fibers with chemical adhesives to improve the adhesion between the fiber and the rubber. However, such surface treatments do not always result in the desired performance.

There is, therefore, a need for an improved tire with a component containing short fibers.

### Summary of the Invention

The invention relates to a tire according to claim 1.

Dependent claims refer to preferred embodiments of the invention.

In a preferred aspect, the present invention is directed to a pneumatic tire comprising at least one component, the at least one component comprising a rubber composition, the rubber composition comprising a diene based elastomer and from 1 to 30 parts by weight, per 100 parts by weight of elastomer (phr), of a polyketone fibers having a length ranging from 0.5 to 20 mm and having a weight ranging from 0.5 to 5 decitex, and from 1 to 30 phr of an epoxidized polyisoprene having a number-average molecular weight of 5000 to 100000.

### Detailed Description of the Invention

There is disclosed a pneumatic tire comprising at least one component, the at least one component comprising a rubber composition, the rubber composition comprising a diene based elastomer and from 1 to 100 phr, preferably 1 to 30 parts by weight, per 100 parts by weight of elastomer (phr), of a polyketone fibers having a length ranging from 0.5 to 20 mm and preferably having a weight ranging from 0.5 to 5 decitex, and from 1 to 30 phr of an epoxidized polyisoprene having a number-average molecular weight of 5000 to 100000.

The rubber composition includes a polyketone fiber. In one embodiment, a suitable polyketone fiber is produced by a method as taught for example in US-A-6,818,728 and US-A- 6,881,478, the teachings of both of which are fully incorporated herein by reference. After production of polymeric fiber, the fiber may be cut to the desired length by methods as are known in the art.

In one embodiment, the polyketone fibers are as disclosed in US-A-6,818,728 and US-A- 6,881,478 and comprise a polyketone containing a ketone unit shown by the following formula (I) as a main repeating unit, and have an intrinsic viscosity of not less than 0.5 dl/g, a crystal orientation of not less than 90%, a density of not less than 1.300 g/cm³, an elastic modulus of not less than 200 cN/dtex, and a heat shrinkage of -1 to 3%.

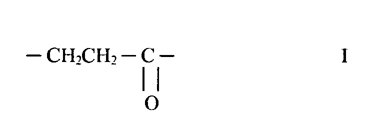

The polyketone fibers of the present invention can be produced by wet spinning a polyketone solution having a phase separation temperature in the range of 0-150°C.

Suitable polyketone fibers can be produced as disclosed in US-A- 6,818,728 and US-A- 6,881,478 by wet spinning a polyketone solution which comprises a polyketone containing a ketone unit represented by the above formula (I) as a main repeating unit and having a molecular weight distribution of 1-6 and a Pd content of not more than 50 ppm and a solvent for dissolving the polyketone and which has a phase separation temperature in a range of 0-150°C. More specifically, the polyketone fibers can be produced by heating the above polyketone solution to a temperature higher than the phase separation temperature, then extruding the solution into a coagulating bath having a temperature lower than the phase separation temperature to form a fibrous material, thereafter removing a part or the whole of the solvent which dissolves the polyketone from the fibrous material, stretching the fibrous material and winding up the fibrous material. The wound long fiber may then be cut to the desired short lengths using methods as are known in the art.

In one embodiment, the polyketone short fiber has an average length of from 0.5 to 20 mm. In a preferred embodiment, the polyketone short fiber has an average length of from 1 to 10 mm.

In a preferred embodiment, the polyketone short fiber has a weight ranging from 0.5 to 5 decitex (decitex = 1 gm/10000 m). In a more preferred embodiment, the polyketone short fiber has a weight ranging from 1 to 3 decitex.

In one embodiment, the polyketone short fiber is present in the rubber composition in a concentration ranging from 1 to 100 parts by weight per 100 parts by weight of diene based elastomer (phr). In another embodiment, the polyketone short fiber is present in the rubber composition in a concentration ranging from 5 to 50 parts by weight per 100 parts by weight of diene based elastomer (phr). In another embodiment, the polyketone short fiber is present in the rubber composition in a concentration ranging from 10 to 30 parts by weight per 100 parts by weight of diene based elastomer (phr).

The rubber composition also includes an epoxidized polyisoprene. In one embodiment, the epoxidized polyisoprene may be as described in US-A-2006/0189720. As described therein, epoxidized polyisoprene in the present specification are obtained by epoxidizing carbon-carbon double bonds in polyisoprene. The epoxidized polyisoprene has a number-average molecular weight of 5000 to 100000, preferably 15000 to 70000, more preferably 20000 to 40000.

As used herein, the number-average molecular weight is in terms of polystyrene according to gel permeation chromatography (GPC).

There is particularly no limitation on the process for producing epoxidized polyisoprene. For example, anionic polymerization can be used. The anionic polymerization may be performed in an inert gas atmosphere such as argon or nitrogen, in a solvent inactive in the polymerization such as hexane, cyclohexane, benzene or toluene, with use of an initiator such as an alkali metal (e.g., metallic sodium or metallic lithium) or an alkyllithium compound (e.g., methyllithium, ethyllithium, n-butyllithium or s-butyllithium), at a polymerization temperature of -100 to 100°C, and over a period of 0.01 to 200 hours.

Subsequently, the polyisoprene obtained is epoxidized at a carbon-carbon double bond to give an epoxidized polyisoprene The process of epoxidation is not particularly limited, and exemplary processes include (i) treatment with a peracid such as peracetic acid, (ii) treatment with a molybdenum complex and t-butylhydroperoxide, (iii) treatment with a tungstic acid catalyst and hydrogen peroxide, and (iv) treatment with a tungsten compound selected from ammonium tungstate and phosphotungstic acid, a quaternary ammonium salt, phosphoric acid, and an aqueous hydrogen peroxide solution.

A part to be epoxidized is not particularly limited. Epoxy groups may be introduced into random parts in a diene rubber molecular chain or particular parts of the diene rubber, e.g. carbon-carbon double bond parts derived from isoprene may be selectively epoxidized.

The epoxy group content of the epoxidized polyisoprene is not strictly limited. In general, it is preferably in the range of 0.1 to 15 meq/g, more preferably 0.3 to 10 meq/g.

In one embodiment, the rubber composition comprises from 1 to 30 phr of epoxidized polyisoprene. In one embodiment, the rubber composition comprises from 5 to 15 phr of epoxidized polyisoprene.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber preferably is of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 28 to 45 percent.

By emulsion polymerization prepared E-SBR, it is meant that styrene and 1,3-butadiene are copolymerized as an aqueous emulsion. The bound styrene content can vary, for example, from about 5 to about 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) is used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as silicas commercially available from PPG Industries under the Hi-Sil trademark with designations 210 and 243; silicas available from Rhodia, with designations of Z1165MP and Z165GR and silicas available from Degussa AG with designations VN2 and VN3.

Commonly employed carbon blacks can be used as a conventional filler in an amount ranging from 10 to 150 phr. Representative examples of such carbon blacks include N 110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including those disclosed in US-A- 6,242,534; US-A- 6,207,757; US-A- 6,133,364; US-A- 6,372,857; US-A- 5,395,891; or US-A-6,127,488, and plasticized starch composite filler including but not limited to that disclosed in US-A- 5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sₙ-Alk-Z III

in which Z is selected from the group consisting of 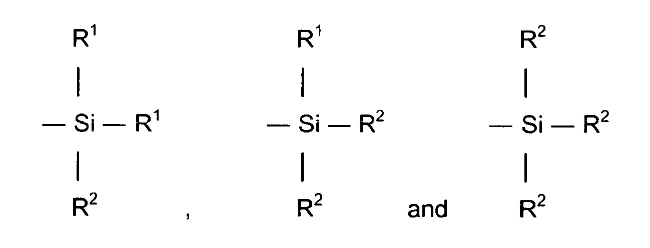 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula III, Z may be 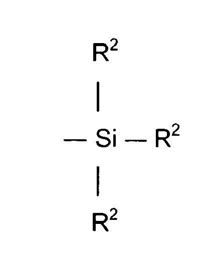 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner.
In one embodiment, the component is a apex, flipper or chipper. In this embodiment, the rubber composition is milled, calendared or extruded to form the apex, flipper, or chipper. The formed component will have the short fibers with an orientation in the direction of processing, that is, a substantial portion of the fibers will generally be oriented in a direction which is consistent with and parallel to the material flow direction in the processing equipment. The rubber composition will have a degree of anisotropy, that is, a modulus measured in a direction consistent with the processing direction will be greater than that measured in a direction perpendicular to the processing direction.

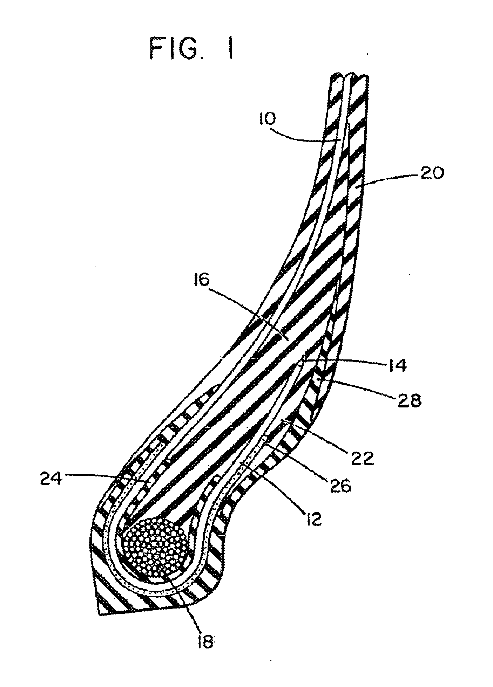

With reference now to Figure 1, a tire according to the invention contains a carcass ply 10 with a turn-up portion 12 and a terminal end 14. The apex 16 is in the immediate proximity of the carcass ply turn-up 14 including the area above the bead 18 and is encased by the carcass ply 10 and carcass ply turn-up 12 or sidewall compound 20. The apex also includes the area 22 located between the lower sidewall 20 and the axially outer side of the carcass ply turn-up 12. The interface between the bead 18 and the carcass ply 10 is a flipper 24. Located outside of the carcass ply 10 and extending in an essentially parallel relationship to the carcass ply 10 is the chipper 26. Located around the outside of the bead 18 is the chafer 28 to protect the carcass ply 12 from the rim (not shown), distribute flexing above the rim, and seal the tire. At least one of apex 16, flipper 24, or chipper 26 comprises the rubber composition as described herein.

In one embodiment, the component is a flipper 24. In prior art applications, a flipper typically comprises textile cord. In such a flipper application, the cord cannot be oriented in a zero degree radial direction to the radial direction of the tire, due to the increase in radius experienced at the bead during tire build. Typically then, the cords are placed at a 45 degree angle with respect to the radial direction of the tire, to allow for the radius increase and deformation of the flipper during tire build; see for example, US-A- 6,659,148. By contrast, a with the short fiber composition of the present invention, the flipper may be constructed such that the short fibers may be oriented at zero degrees with respect to the radial direction of the tire. This is desirable to provide additional support at the bead to counteract the directional stresses experienced at the bead. Thus, the flipper of the present invention is not restricted from a zero degree orientation, but may in one embodiment exist with the short fibers substantially oriented in an angle ranging from 0 to 90 degrees with respect to the radial direction of the tire. By substantially oriented, it is meant that the flipper compound is disposed such that with regard to the dimension of the flipper corresponding to that parallel to the direction of propagation through the flipper's fabrication process (i.e. calendar or extruded), that dimension may be oriented at an angle ranging from 0 to 90 degrees with respect to the radial direction of the tire. In another embodiment, the flipper may be disposed with the fibers oriented at an angle ranging from 0 to 45 degrees with respect to the radial direction of the tire. In another embodiment, the flipper may be disposed with the fibers oriented at an angle ranging from 0 to 20 degrees with respect to the radial direction of the tire. In another embodiment, the flipper may be disposed with the fibers oriented at an angle ranging from 0 to 10 degrees with respect to the radial direction of the tire.

The pneumatic tire of the present invention may be a race tire, passenger tire, aircraft tire, agricultural, earthmover, off-the-road or truck tire. In one embodiment, the tire is a passenger or truck tire. The tire may be a radial or bias tire.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

### Example 1

In this example, the effect of adding a polyketone fiber and an epoxidized polyisoprene to a rubber composition according to the present invention is illustrated. Rubber compositions containing diene based elastomer, fillers, process aids, antidegradants, and curatives were prepared following recipes as shown in Table 1, with all amounts given in parts by weight per 100 parts by weight of base elastomer (phr). Sample 1 contained no fiber or epoxidized polyisoprene and served as a control. Sample 2 included polyketone short fibers and Sample 3 contained epoxidized polyisoprene, and are comparative. Sample 4 contained both polyketone fibers and epoxidized polyisoprene and is representative of the present invention.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993.

The "RPA" test results in Table 2 are reported as being from data obtained at 100°C in a dynamic shear mode at a frequency of 1 Hertz and at the reported dynamic strain values. Tensile and hardness properties were also measured and reported in Table 2.

Cold Tensile rubber samples were milled into a sheet and cut into tensile test specimens. Tensile test specimens were cut in two orientations, one with the test pulling direction parallel with the milling direction of the specimen, and one with the test pulling direction perpendicular with the milling direction of the specimen. In this way, the effect of fiber orientation (generally in the direction of milling) and thus the anisotropy of the rubber composition was measured.

**Table 1**

| *Non Productive Mix Step* | |
|---|---|
| Natural Rubber | 100 |
| Epoxidized Polyisoprene ¹ | variable as per Table 2 |
| Carbon Black² | variable as per Table 2 |
| Resorcinol | 1.8 |
| Antidegradants³ | 0.85 |
| ZnO | 3 |
| Stearic Acid | 3 |
| Polyketone Fiber⁴, 3 mm | variable as per Table 2 |

| *Productive Mix Step* | |
|---|---|
| Hexamethylenetetramine | 1.3 |
| Sulfur⁵ | 2.5 |
| Accelerator⁶ | 1.1 |

| | |
|---|---|
| ¹ Epoxidised Polyisoprene, 1.46 meq/g Epoxide, by Kuraray, Tradename KL630T ² HAF ³ p-phenylene diamine and quinoline types ⁴ 3 mm average length ⁵ Mixed insoluble and elemental sulfur ⁶ Sulfenamide type | |

**Table 2**

| Sample No. | 1 | 2 | 3 | 4 |
|---|---|---|---|---|
| Carbon Black, phr | 46 | 28 | 46 | 28 |
| Polyketone, phr | 0 | 15 | 0 | 15 |
| Epoxidized Polyisoprene, phr | 0 | 0 | 10 | 10 |

**Table 3**

| ***RPA2000*** | | | | |
|---|---|---|---|---|
| Cured 18 min @ 150°C, Frequency = 1.7 Hz, Dyn Strain = 0.7 % | | | | |
| Max Torque dNm | 2.1 | 3.5 | 5.15 | 3.12 |
| T90 min | 6.1 | 7.1 | 6.54 | 7.28 |
| Test: @ 100°C, Frequency = 11 Hz, Strain Sweep | | | | |
| TD (2) 1 % strain | 0.105 | 0.033 | 0.062 | 0.046 |
| TD (5) 5% strain | 0.159 | 0.046 | 0.116 | 0.05 |
| TD (7) 10% strain | 0.17 | 0.043 | 0.123 | 0.05 |

| ***MDR2000 LIGHT TIRE*** | | | | |
|---|---|---|---|---|
| Test: @ 150°C | | | | |
| Min Torque dNm | 2.5 | 2.3 | 2.41 | 2.08 |
| Max Torque dNm | 26.8 | 25.6 | 23.52 | 22.43 |
| Delta Torque dNm | 24.3 | 23.2 | 21.11 | 20.35 |
| T90 min | 6.3 | 7.1 | 6.4 | 7.3 |

| ***Ring Modulus*** | | | | |
|---|---|---|---|---|
| Cure: 10 min @ 150°C; Test: @ 23°C, Pulling Speed = 50 cm/min | | | | |
| Elongation % | 466.9 | 159.9 | 498.6 | 290 |
| Relative Elongation vs. Sample 1 | 1 | 0.34 | 1.07 | 0.62 |
| 100% Modulus MPa | 3.6 | 8.1 | 2.9 | 5.9 |
| Tensile Strength MPa | 25.6 | 9.8 | 23.9 | 9.1 |
| Rebound Value% | 57.9 | 65.54 | 56.9 | 63 |
| Shore A | 73 | 80.5 | 68.9 | 77.3 |

| ***Tear*** | | | | |
|---|---|---|---|---|
| Cure: 10 min @ 150°C; Test: @ 100°C, Pulling Speed = 50 cm/min, Adhesion To=Itself | | | | |
| Tear Strength N/mm | 30.3 | 5.4 | 34 | 6.2 |

| ***Cold Tensile D53504*** | | | | |
|---|---|---|---|---|
| Cure: 10 min @ 150°C; Test: @ 23°C, Pulling Speed = 20 cm/min | | | | |
| Direction: parallel to fibers | | | | |
| Elongation % | 480.1 | 147.0 | 473.8 | 322 |
| Relative Elongation vs. Sample 1 | 1 | 0.31 | 0.99 | 0.67 |
| 100% Modulus MPa | 4.0 | 12.7 | 3.4 | 7.9 |
| 200% Modulus MPa | 10.7 | 13.1 | 8.8 | 8.6 |
| Tensile Strength MPa | 33.5 | 12.1 | 29.8 | 14 |
| Direction: perpendicular to fibers | | | | |
| Elongation % | 458.1 | 219.0 | 493.8 | 253.1 |
| Relative Elongation v Sample 1 | 1 | 0.48 | 1.08 | 0.55 |
| 100% Modulus MPa | 4.0 | 5.9 | 3.3 | 5.2 |
| 200% Modulus MPa | 10.7 | 10.2 | 8.5 | 7.2 |
| Tensile Strength MPa | 31.7 | 11.0 | 31.3 | 8.4 |

As seen in Table 3, the rubber sample including the combination of polyketone fiber and epoxidized polyisoprene showed a surprising and unexpected improvement in physical properties compared to samples containing only the polyketone fiber or only the epoxidized polyisoprene. In particular, the elongation at break indicates an unexpected interaction between the polyketone fibers and epoxidized polyisoprene. The effect is seen best with cold tensile tests done with the test pulling direction parallel with the milling direction of the specimen. A relative elongation at break was calculated for each sample by dividing the elongation of the sample with that of Sample 1. Sample 2 with polyketone fibers but no epoxidized polyisoprene showed a relative elongation of 0.31, indicating poor interaction the fibers with the base elastomer (natural rubber). Sample 3 with epoxidized polyisoprene but no polyketone fibers showed a relative elongation of 0.99, indicating little effect of adding the epoxidized polyisoprene on elongation. However, Sample 4 with polyketone fibers and epoxidized polyisoprene showed a relative elongation of 0.67, indicating a surprising interaction between the polyketone fibers and epoxidized polyisoprene resulting in unexpectedly improved elongation as compared with Sample 2.

## Claims

1. A pneumatic tire comprising at least one component, the at least one component comprising a rubber composition, the rubber composition comprising a diene based elastomer and from 1 to 100 parts by weight, per 100 parts by weight of elastomer (phr), of a polyketone fibers having a length ranging from 0.5 to 20 mm, and from 1 to 100 phr of an epoxidized polyisoprene having a number-average molecular weight of 5000 to 100000.

2. The pneumatic tire of claim 1, wherein the epoxidized polyisoprene has an epoxy group content of 0.1 to 15 meq/g.

3. The pneumatic tire of claim 2, wherein the epoxidized polyisoprene has an epoxy group content of 0.3 to 10 meq/g.

4. The pneumatic tire of at least one of the previous claims, wherein the epoxidized polyisoprene is present in a concentration of from 1 to 30 phr, alternately from 5 to 15 phr.

5. The pneumatic tire of at least one of the previous claims, wherein the epoxidized polyisoprene has a number-average molecular weight of 15000 to 70000.

6. The pneumatic tire of claim5, wherein the epoxidized polyisoprene has a number-average molecular weight of 20000 to 40000.

7. The pneumatic tire of at least one of the previous claims, wherein the amount of polyketone fiber ranges from 1 to 30 phr, alternately from 5 to 15 phr.

8. The pneumatic tire of at least one of the previous claims, wherein the at least one component is selected from the group consisting of an apex (16), a flipper (24) and a chipper (26).

9. The pneumatic tire of claim 8, wherein the component is a flipper (24).

10. The pneumatic tire of claim 9, wherein the flipper (24) is disposed with the fibers substantially oriented in an angle ranging from 0 to 90 degrees with respect to the radial direction of the tire.

11. The pneumatic tire of claim 10, wherein the flipper (24) is disposed with the fibers substantially oriented in an angle ranging from 0 to 45 degrees with respect to the radial direction of the tire.

12. The pneumatic tire of claim 11, wherein the flipper is disposed with the fibers substantially oriented in an angle ranging from 0 to 20 degrees with respect to the radial direction of the tire.

13. The pneumatic tire of claim 12, wherein the flipper (24) is disposed with the short fibers substantially oriented in an angle ranging from 0 to 10 degrees with respect to the radial direction of the tire.

14. The pneumatic tire of at least one of the previous claims wherein the polyketone fibers have a weight ranging from 0.5 to 5 decitex.

## Patentansprüche

1. Luftreifen, umfassend mindestens ein Bauteil, wobei das mindestens eine Bauteil eine Kautschukzusammensetzung umfasst, wobei die Kautschukzusammensetzung ein dienbasiertes Elastomer und 1 bis 100 Gewichtsteile je 100 Gewichtsteile Elastomer (ThK) an Polyketonfasern mit einer Länge von 0,5 bis 20 mm und 1 bis 100 ThK eines epoxidierten Polyisoprens mit einer zahlenmittleren Molmasse von 5.000 bis 100.000 umfasst.

2. Luftreifen nach Anspruch 1, wobei das epoxidierte Polyisopren einen Epoxygruppengehalt von 0,1 bis 15 mVal/g aufweist.

3. Luftreifen nach Anspruch 2, wobei das epoxidierte Polyisopren einen Epoxygruppengehalt von 0,3 bis 10 mVal/g aufweist.

4. Luftreifen nach mindestens einem der vorgenannten Ansprüche, wobei das epoxidierte Polyisopren in einer Konzentration von 1 bis 30 ThK, alternativ von 5 bis 15 ThK, vorliegt.

5. Luftreifen nach mindestens einem der vorgenannten Ansprüche, wobei das epoxidierte Polyisopren eine zahlenmittlere Molmasse von 15.000 bis 70.000 aufweist.

6. Luftreifen nach Anspruch 5, wobei das epoxidierte Polyisopren eine zahlenmittlere Molmasse von 20.000 bis 40.000 aufweist.

7. Luftreifen nach mindestens einem der vorgenannten Ansprüche, wobei die Menge an Polyketonfasern sich auf 1 bis 30 ThK, alternativ auf 5 bis 15 ThK, beläuft.

8. Luftreifen nach mindestens einem der vorgenannten Ansprüche, wobei das mindestens eine Bauteil aus der aus einem Kernprofil (16), einer Kernfahne (24) und einem Wulstverstärker (26) bestehenden Gruppe ausgewählt ist.

9. Luftreifen nach Anspruch 8, wobei das Bauteil eine Kernfahne (24) ist.

10. Luftreifen nach Anspruch 9, wobei die Kernfahne (24) so angeordnet ist, dass die Fasern im Wesentlichen in einem Winkel von 0 bis 90 Grad bezüglich der radialen Richtung des Reifens ausgerichtet sind.

11. Luftreifen nach Anspruch 10, wobei die Kernfahne (24) so angeordnet ist, dass die Fasern im Wesentlichen in einem Winkel von 0 bis 45 Grad bezüglich der radialen Richtung des Reifens ausgerichtet sind.

12. Luftreifen nach Anspruch 11, wobei die Kernfahne so angeordnet ist, dass die Fasern im Wesentlichen in einem Winkel von 0 bis 20 Grad bezüglich der radialen Richtung des Reifens ausgerichtet sind.

13. Luftreifen nach Anspruch 12, wobei die Kernfahne (24) so angeordnet ist, dass die Kurzfasern im Wesentlichen in einem Winkel von 0 bis 10 Grad bezüglich der radialen Richtung des Reifens ausgerichtet sind.

14. Luftreifen nach mindestens einem der vorgenannten Ansprüche, wobei die Polyketonfasern ein Gewicht von 0,5 bis 5 Decitex haben.

## Revendications

1. Bandage pneumatique comprenant au moins un composant, ledit au moins un composant comprenant une composition de caoutchouc, la composition de caoutchouc comprenant un élastomère à base diénique et, à concurrence de 1 à 100 parties en poids par 100 parties en poids d'élastomère phr, des fibres de polycétone possédant une longueur qui se situe dans la plage de 0,5 à 20 mm et, à concurrence de 1 à 100 phr, un polyisoprène époxydé possédant un poids moléculaire moyen en nombre de 5000 à 100.000.

2. Bandage pneumatique selon la revendication 1, dans lequel le polyisoprène époxydé possède une teneur en groupes époxy de 0,1 à 15 méq/g.

3. Bandage pneumatique selon la revendication 2, dans lequel le polyisoprène époxydé possède une teneur en groupes époxy de 0,3 à 10 méq/g.

4. Bandage pneumatique selon au moins une des revendications précédentes, dans lequel le polyisoprène époxydé est présent en une concentration de 1 à 30 phr, en variante de 5 à 15 phr.

5. Bandage pneumatique selon au moins une des revendications précédentes, dans lequel le polyisoprène époxydé possède un poids moléculaire moyen en nombre de 15.000 à 70.000.

6. Bandage pneumatique selon la revendication 5, dans lequel le polyisoprène époxydé possède un poids moléculaire moyen en nombre de 20.000 à 40.000.

7. Bandage pneumatique selon au moins une des revendications précédentes, dans lequel la quantité des fibres de polycétone se situe dans la plage de 1 à 30 phr, en variante de 5 à 15 phr.

8. Bandage pneumatique selon au moins une des revendications précédentes, dans lequel ledit au moins un composant est choisi parmi le groupe constitué par un bourrage sur tringle (16), une bandelette de protection de la tringle de talon (24) et un renfort d'appui (26)

9. Bandage pneumatique selon au moins une des revendications précédentes, dans lequel le composant est une bandelette de protection de tringle de talon (24).

10. Bandage pneumatique selon la revendication 9, dans lequel la bandelette de protection de tringle de talon (24) est disposée de telle sorte que les fibres sont essentiellement orientées en formant un angle dans la plage de 0 à 90° par rapport à la direction radiale du bandage pneumatique.

11. Bandage pneumatique selon la revendication 10, dans lequel la bandelette de protection de tringle de talon (24) est disposée de telle sorte que les fibres sont essentiellement orientées en formant un angle dans la plage de 0 à 45° par rapport à la direction radiale du bandage pneumatique.

12. Bandage pneumatique selon la revendication 11, dans lequel la bandelette de protection de tringle de talon (24) est disposée de telle sorte que les fibres sont essentiellement orientées en formant un angle dans la plage de 0 à 20° par rapport à la direction radiale du bandage pneumatique.

13. Bandage pneumatique selon la revendication 12, dans lequel la bandelette de protection de tringle de talon (24) est disposée de telle sorte que les fibres sont essentiellement orientées en formant un angle dans la plage de 0 à 10° par rapport à la direction radiale du bandage pneumatique.

14. Bandage pneumatique selon au moins une des revendications précédentes, dans lequel les fibres possèdent un poids dans la plage de 0,5 à 5 décitex.
